# EUROPEAN PATENT APPLICATION

(11) **EP 4 737 982 A1**
(43) Date of publication of application: **06.05.2026**
(21) Application number: 25207235.0
(22) Date of filing: 07.10.2025
(51) Int. Cl.: G02B 27/00, B08B 3/12, B08B 7/02, G03B 17/08

(54) **SUSPENDED CAMERA COVER GLASS FOR ULTRASONIC CLEANING**

(30) Priority: 04.11.2024 US 202463715925 P; 23.09.2025 US 202519337403
(71) Applicant: Deere & Company, Moline, IL 61265 (US)
(72) Inventor: Grodahl, Jason, Mannheim (DE); Bonefas, Zachary T., Mannheim (DE); Ellerbach, Joseph J., Mannheim (DE); Brown, Jason, Mannheim (DE)
(74) Representative: Holst, Sönke

(57) **Abstract**

A sensor assembly that includes a housing that defines a cavity therein, a lens disposed in the cavity, an image sensor disposed in the cavity, a cover glass movably coupled to the housing, and a piezoelectric device coupled to the cover glass. The image sensor is aligned with the lens along an optical axis of the sensor assembly. The cover glass is positioned outward from the lens and the image sensor such that the image sensor is configured to capture images within a field of view of the lens through the cover glass. The piezoelectric device is configured to oscillate the cover glass to clean one or more surfaces of the cover glass.

## Description

This disclosure relates to a sensor system, and more particularly, to ultrasonic cleaning of cover glass of a sensor system.

### BACKGROUND

Sensor systems may be used in various agriculture, construction, automotive, forestry, mining, and maintenance operations to capture images for analysis of different parameters to determine overall performance of the various operations. Such sensor systems may be connected to machinery to capture images during operation of the machinery and analyze the captured images to enhance performance of the machinery.

### SUMMARY

In one aspect of the present disclosure, a sensor assembly is disclosed. The sensor assembly includes a housing that defines a cavity therein, a lens disposed in the cavity, an image sensor disposed in the cavity, a cover glass movably coupled to the housing, and a piezoelectric device coupled to the cover glass. The image sensor is aligned with the lens along an optical axis of the sensor assembly. The cover glass is positioned outward from the lens and the image sensor such that the image sensor is configured to capture images within a field of view of the lens through the cover glass. The piezoelectric device is configured to oscillate the cover glass to clean one or more surfaces of the cover glass.

In some implementations, the cover glass may be movably coupled to the housing in a suspended state such that the cover glass is free of direct contact with the housing. The cover glass may be movably coupled to the housing by a cover glass seal disposed therebetween.

In some implementations, the cover glass may include a front surface that is configured to be exposed to environmental elements and an opposing rear surface that faces the lens. The piezoelectric device may be coupled to the opposing rear surface of the cover glass and laterally positioned between the housing and the optical axis with respect to the optical axis.

In some implementations, the piezoelectric device may be configured to vibrate the cover glass. At least a portion of the piezoelectric device may be configured to expand and contract in response to application of an electrical voltage to the piezoelectric device to vibrate the cover glass at a frequency of about 20 kHz to about 400 kHz.

In some implementations, the housing may include a main housing, a front housing coupled to the main housing and positioned outward from the cover glass, and a rear housing coupled to the main housing and positioned inward from the main housing and the front housing. The cover glass may be movably coupled to the main housing. The front housing may extend towards the optical axis beyond a peripheral edge of the cover glass such that the peripheral edge of the cover glass is obstructed from view from a viewpoint external to the sensor assembly. A front seal may be disposed between the front housing and the main housing. A rear seal may be disposed between the rear housing and the main housing.

In some implementations, the piezoelectric device may be configured to be electrically connected to a control module. The control module may be configured to operate the piezoelectric device to oscillate the cover glass.

In another aspect of the present disclosure, a sensor assembly for an agriculture machine is disclosed. The sensor assembly includes a housing, a lens disposed in the housing along an optical axis of the sensor assembly, an image sensor disposed in the housing and positioned inward from the lens along the optical axis, a cover glass movably coupled to the housing by a cover glass seal, and a piezoelectric device coupled to a surface of the cover glass. The image sensor is configured to capture images within a field of view of the lens through the cover glass. The piezoelectric device is configured to vibrate the cover glass to clean the cover glass. The cover glass seal is configured to maintain a seal between the cover glass and the housing when the cover glass is vibrated by the piezoelectric device.

In some implementations, the cover glass seal may be made of a flexible material that allows for vibration of the cover glass while still maintaining the seal between the cover glass and the housing.

In some implementations, the piezoelectric device may be configured to vibrate at different frequencies to remove at least one of debris, moisture, frost, or ice from the cover glass. The piezoelectric device may be configured to selectively vibrate at ultrasonic frequencies.

In some implementations, the piezoelectric device may be configured to selectively vibrate at different frequencies based upon detection of a particular contaminant disposed on one or more surfaces of the cover glass.

In another aspect of the present disclosure, a sensor assembly is disclosed. The sensor assembly includes a housing that defines a cavity therein, a sensor disposed in the cavity, a cover glass coupled to the main housing by a cover glass seal, and a piezoelectric device coupled to the cover glass and configured to vibrate the cover glass with respect to the housing to clean the cover glass. The housing includes a main housing and a front housing coupled to the main housing. The cover glass seal is compressed between the front housing and the main housing to form a waterproof seal therebetween and to couple the cover glass to the main housing in a suspended state that allows movement of the cover glass with respect to the housing while maintaining the waterproof seal.

In some implementations, the piezoelectric device may be configured to vibrate the cover glass at one or more frequencies to clean one or more surfaces of the cover glass. The piezoelectric device may include a first electrode, a second electrode, and a piezoelectric material disposed between the first electrode and the second electrode. The first electrode and the second electrode may be configured to receive an electrical voltage to expand and contract the piezoelectric material to thereby vibrate the cover glass.

In some implementations, the cover glass seal may include a front portion and a rear portion coupled to the front portion. The front portion and the rear portion may be made of dissimilar materials such that a hardness of the front portion is different than a hardness of the rear portion.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1A is a side view of an example of a machine that includes a sensor system in accordance with the present teachings.
FIG. 1B is a top-down view of the machine shown in FIG. 1A.
FIG. 2A is a top-down view of a sensor system in accordance with the present teachings.
FIG. 2B is cross-section 2B-2B of the sensor system shown in FIG. 2A.
FIG. 2C is close-up view 2C of the sensor system shown in FIG. 2B.
FIG. 3 is a close-up view of a second example of a sensor assembly in accordance with the present teachings.
FIG. 4 is an example of a computing device.
FIG. 5 is a flowchart of an example of a technique for operating a sensor assembly that includes cleaning of a cover glass.
FIG. 6 is a flowchart of a first example of a technique for cleaning a cover glass of a sensor assembly.
FIG. 7 is a flowchart of a second example of a technique for cleaning a cover glass of a sensor assembly.

### DETAILED DESCRIPTION

The present disclosure relates to a sensor system for use with various machinery, providing a cost-effective and accurate way of monitoring an environment surrounding the machinery. The sensor system may be configured for use with agricultural machinery, construction equipment, automotive vehicles, forestry equipment, mining equipment, maintenance vehicles, or other types of machinery. By way of example, the sensor system may be configured for use with agricultural machinery, such as a planter machine configured to plant various seeds or a sprayer machine configured to apply one or more products (e.g., nutrients, fertilizers, pesticides, soil amendments, water, or growth regulators) to various crops.

The sensor system may be configured to detect and/or analyze a region surrounding the machinery being operated (e.g., agricultural machinery). The sensor system may detect objects, movement, environmental conditions, crop conditions (e.g., crop health, crop nutrient levels, etc.), crop dimensions (e.g., crop width, crop height, crop row width, etc.), or a combination thereof, which may be analyzed to determine the performance of the associated machinery and/or to determine an overall condition of the region surrounding the machinery. For example, the sensor system may include one or more sensor assemblies. One or more of the sensor assemblies may, for example, each include an image sensor (e.g., a camera) that may be configured to capture images and/or videos within a field of view (e.g., within a field of view of a lens of a respective sensor assembly that includes the image sensor), may be configured to detect environmental conditions (e.g., temperature, humidity, wind, etc.), may be configured to detect operating conditions of the machinery (e.g., movement of the machinery, machinery degradation, etc.), or a combination thereof.

The sensor system may include proximity sensors that may be configured to detect obstacles or other machinery nearby; acoustic sensors that may be configured to identify machinery anomalies through sound analysis; operational sensors that may be configured to detect or measure operating conditions of the machinery (e.g., movement of the machinery, machinery degradation, fuel levels, speed, GPS location, etc.); other types of sensors; or a combination thereof.

Conventional sensor systems may be coupled to the machinery being operated in a manner that exposes the sensor systems to environmental elements. For example, a sensor system may be coupled to an exterior of a frame of the machinery. As a result, the sensor assembly of the sensor system may degrade over time due to environmental elements, such as debris (e.g., dust, objects that may impact the sensors, etc.), moisture (e.g., fog, humidity, rain, snow, etc.), or both. Similarly, the environmental elements may impair or obstruct the field of view of a lens of a sensor assembly, thereby impacting operations of the sensor system. For example, one or more of debris moisture, frost, or ice on a lens or a cover glass of a sensor assembly may obstruct the sensor assembly (e.g., the image sensor) from accurately capturing images and/or videos within the field of view of the lens. Additionally, due to the mounting locations of a sensor assembly, it may be difficult to clean the sensor assembly or otherwise maintain a clear field of view for a lens of the sensor assembly.

The present teachings provide a sensor system that addresses the aforementioned challenges. The sensor system as described herein may advantageously be configured to prevent degradation or obstruction of one or more sensor assemblies within the sensor system. For example, a sensor assembly of the sensor system may include a cover glass that is configured to protect the sensor assembly from environmental elements. Additionally, the sensor assembly may include a piezoelectric device that is configured to clean all or a portion of the cover glass to remove at least one of debris, moisture, frost, or ice from the cover glass, thereby further ensuring that the field of view of the lens of the sensor assembly remains unobstructed. Such protection may also prevent degradation of the sensor assembly that may be caused by the environmental elements.

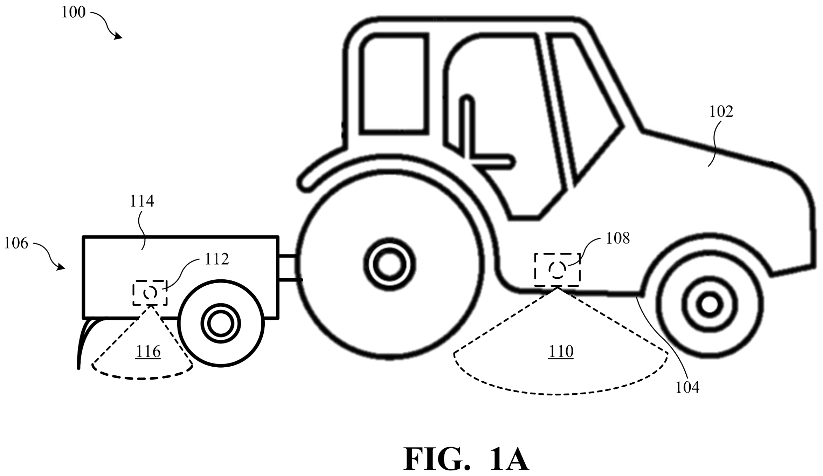

Turning now to the figures, FIG. 1A illustrates a side view of a machine 100 in accordance with the present teachings. The machine 100 may include a body 102 and a frame 104. The frame 104 may form part of the body 102 or may support the body 102 of the machine 100. Additionally, the machine 100 may include a sensor system 106. As discussed above, the machine 100 is not limited to any specific type of machinery. For example, the machine 100 may be a vehicle, equipment, other object, or a combination thereof. The machine 100 may be configured for operation in any type of industry, including agriculture, horticulture, or other types of industry. By way of example, as shown in FIG. 1A, the machine 100 may be an agriculture machine, such as a tractor or applicator that is configured to apply one or more products (e.g., fertilizer, nutrients, fungicide, pesticide, etc.) to crops. In some configurations, the agriculture machine may be remotely and/or autonomously operated such that an operator need not be present at the location of the agriculture machine.

The sensor system 106 may be coupled to the machine 100 so that one or more sensor assemblies of the sensor system 106, such as a first sensor assembly 108, may be positioned to monitor or otherwise interact with an area around the machine 100. For example, the first sensor assembly 108 may be coupled to the body 102 or the frame 104 of the machine 100, such as along an outer region or outer surface of the frame 104. Thus, a field of view 110 of the first sensor assembly 108 (e.g., a field of view of a lens of the first sensor assembly 108) may extend outboard with respect to the machine 100 along the ground beneath the machine 100.

Alternatively, or additionally, the sensor system 106 may be coupled to an accessory or secondary component of the machine 100. For example, as shown in FIG. 1A, the sensor system 106 may include a second sensor assembly 112 coupled to a trailer 114 of the machine 100. The trailer 114 may be connected to the machine 100 so that the trailer 114 may, for example, be towed or pushed by the machine 100. For example, the trailer 114 may be an applicator that is configured to apply water, nutrients, fertilizer, pesticides, fungicides, or a combination thereof to the crops. As such, the second sensor assembly 112 may be positioned external to the trailer 114 so that a field of view 116 of the second sensor assembly 112 (e.g., a field of view of a lens of the second sensor assembly 112) may extend outboard with respect to the trailer 114 along the ground beneath the trailer 114.

It should be noted that the sensor system 106 may include any number of sensor assemblies (e.g., zero or more of the first sensor assembly 108, zero or more of the second sensor assembly 112, one or more additional sensor assemblies, etc.) and may be positioned in any desired manner by adjusting the mounting of the sensor system 106 to the machine 100 and/or to the trailer 114. That is, an overall field of view, which may include the field of view 110 of the first sensor assembly 108 and/or the field of view 116 of the second sensor assembly 112, may be configured to capture any desired region around the machine 100, which may include parts or components of the machine 100 and/or the trailer 114, surrounding crops, the ground surrounding the machine 100 and/or the trailer 114, or a combination thereof.

By way of example, the machine 100 may be coupled to the trailer 114 to drive the trailer 114, whereby the trailer 114 may be an applicator configured to apply a topical spray to existing crops within a field, such as a pesticide or fertilizer. In this configuration, the sensor system 106 may be coupled to the machine 100 and/or the trailer 114 so that the field of view 110 of the first sensor assembly 108 and/or the field of view 116 of the second sensor assembly 112 can monitor the crops within the field. The first sensor assembly 108 and the second sensor assembly 112 may be positioned to monitor various crop-related parameters (e.g., sensor data associated with the crops) and/or monitor operation of the machine 100 (e.g., sensor data associated with the operation of the machine 100). The first sensor assembly 108 and the second sensor assembly 112 (e.g., respective image sensors of the first sensor assembly 108 and the second sensor assembly 112) may capture the sensor data associated with the crops, which may then be evaluated by the sensor system 106 (e.g., by a control module therein) or by a device in communication with the sensor system 106 (e.g., a computing device or system of the machine 100 in communication with the sensor system 106) to determine a current condition (e.g., health) of the crops. Captured sensor data associated with the operation of the machine 100 may be evaluated by the sensor system 106 (e.g., by the control module therein) or a device in communication with the sensor system 106 (e.g., a computing device or system of the machine 100 in communication with the sensor system 106) to determine the quality of performance of the machine 100.

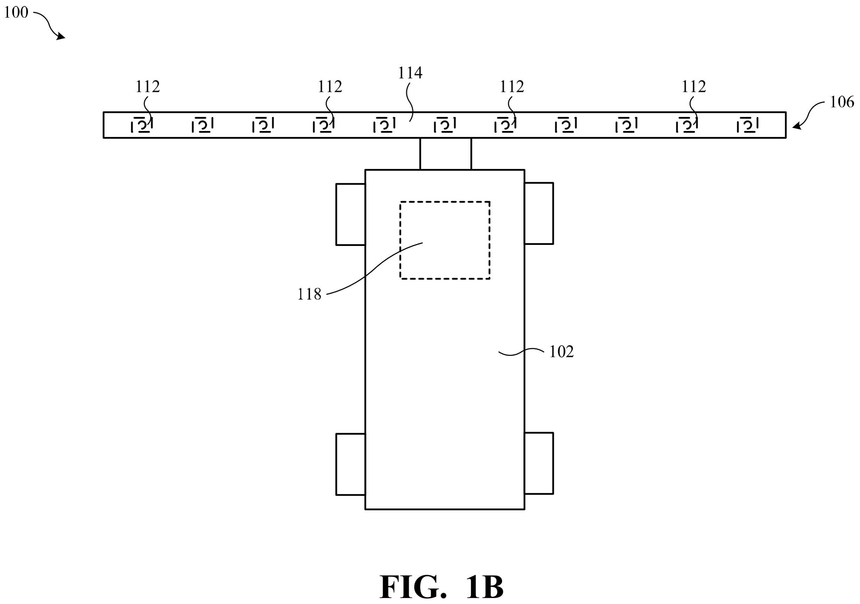

FIG. 1B illustrates a top-down view of the machine 100 and the trailer 114 shown in FIG. 1A. As discussed above, the sensor system 106 may include more than one of the first sensor assembly 108 and/or more than one of the second sensor assembly 112. In certain configurations, the sensor system 106 may not include the first sensor assembly 108 or may not include the second sensor assembly 112.

By way of example, FIG. 1B illustrates an array of the second sensor assembly 112. The array includes a plurality of the second sensor assembly 112, which may extend along substantially the entire width of the trailer 114, as measured transverse to a direction of travel of the machine 100 and the trailer 114 during operation. Each of the sensor assemblies of the array of the second sensor assembly 112 may include a field of view that may be similar to the field of view 116 shown in FIG. 1A. As a result, the array of the second sensor assembly 112 (e.g., image sensors thereof) may monitor and capture data (e.g., data associated with the crops and/or data associated with the operation of the machine 100) in a surrounding area that extends along the width of the trailer 114. The captured data may then be evaluated by the sensor system 106 or a device in communication with the sensor system 106 (e.g., a computing device or system of the machine 100 in communication with the sensor system 106). For example, the captured data may be initially transmitted from the array of the second sensor assembly 112 to a control module (not shown) of the sensor system 106, which may in turn transmit the captured data to a control module 118 of the machine 100. In such a case, the control module of the sensor system 106 and/or the control module 118 of the machine 100 may evaluate the captured data.

It should be noted that, while the trailer 114 is described in detail above, implementation of the sensor system 106 is not limited to the trailer 114. By way of example, the sensor system 106 may be implemented on self-propelled machinery, such as a self-propelled sprayer or applicator. For example, the sensor system 106 may include one or more sensor assemblies that may be positioned along a boom of the self-propelled machinery such that the one or more sensor assemblies may be positioned on at least one of a front portion, a rear portion, one or more side portions, a top portion, and a bottom portion of the machinery (e.g., on the boom of the machinery). As such, the sensor system 106 may be configured to monitor a direction of travel of the machinery or other directions transverse to the direction of travel of the machinery.

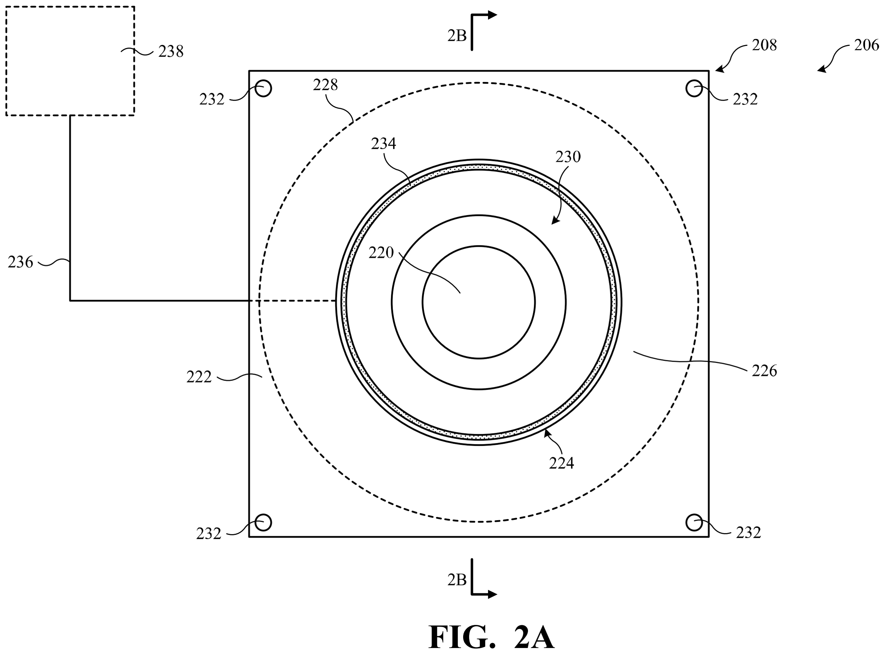

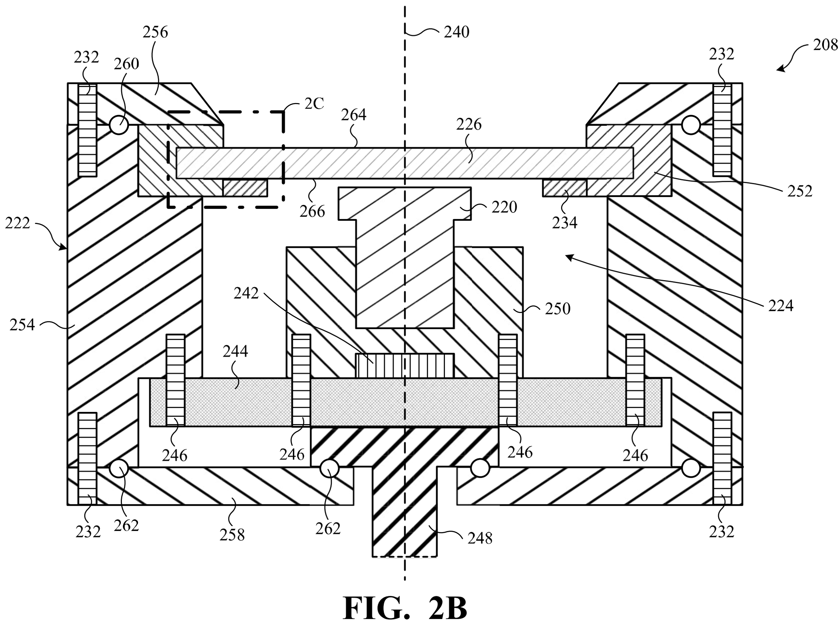

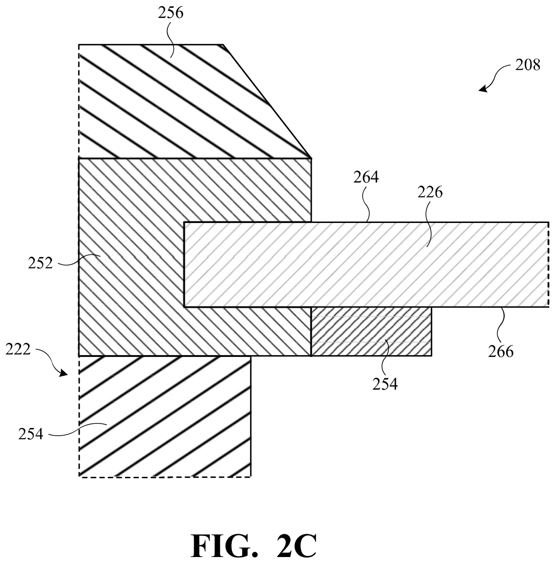

FIG. 2A illustrates a top-down view of a sensor system 206 that includes a sensor assembly 208. The sensor system 206 can be the sensor system 106 of FIG. 1A and the sensor assembly 208 can be one of the first sensor assembly 108 or the second sensor assembly 112 of FIG. 1A. Additionally, FIG. 2B is the cross-sectional view 2B-2B of the sensor system 206 shown in FIG. 2A. Moreover, FIG. 2C is the close-up view 2C of the sensor system 206 shown in FIG. 2B.

The sensor assembly 208 may include a lens 220 that may be disposed within a housing 222 of the sensor assembly 208. That is, the housing 222 may define a cavity 224 therein, and the lens 220 may be located within the cavity 224 of the housing 222. The lens 220 may at least partially project from the housing 222 or may be recessed from an outer surface of the housing 222. For example, the lens 220 may extend outboard from a surface of the housing 222 so that the field of view (such as one of the fields of view 110 or 116 discussed above) of the lens 220 is not obstructed by the housing 222. Alternatively, the lens 220 may be recessed from the outer surface of the housing 222 so that the lens 220 is entirely contained within the cavity 224 of the housing 222.

The lens 220 may be configured such that the sensor assembly 208 (e.g., an image sensor 242 therein, as shown in FIG. 2B) captures images within the field of view of the lens 220 (e.g., through the lens 220, which may thereby determine the field of view). Such images may be still images or videos so that the sensor system 206, independently or in conjunction with a computing system, may analyze the images or videos to determine the overall performance of the machine 100 and/or to assess the environment surrounding the machine 100 (e.g., to assess one or more crops located in the environment). The sensor assembly 208 may also include any number of lenses (e.g., zero or more of the lens 220, one or more of the lens 220, one or more additional lenses, etc.)

The sensor assembly 208 may be configured for various types of sensing operations and is not limited to capturing images in the field of view. For example, the sensor assembly 208 may be or may include a proximity sensor, an accelerometer, a temperature sensor, a pressure sensor, a photodetector, the image sensor 242, a hall effect sensor, a humidity sensor, an infrared sensor, another type of sensor, or a combination thereof. As such, the sensor assembly 208 may be configured to detect various parameters in any desired manner (e.g., image capturing, infrared sensing, magnetism measurement, etc.)

The sensor assembly 208 may further include a cover glass 226 coupled to the housing 222. The cover glass 226 may be directly or indirectly coupled to the housing 222. For example, the cover glass 226 may be bonded (e.g., adhered) and/or mechanically secured directly to the housing 222. Alternatively, as described in further detail below, the cover glass 226 may be indirectly and/or movably coupled to the housing 222 via one or more components (e.g., a seal) disposed therebetween. The cover glass 226 may be coupled to the housing 222 in such a manner that the field of view of the sensor assembly 208 remains unobstructed by the cover glass 226. For example, the cover glass 226 may be transparent so that light may pass through the cover glass 226 without significant optical scattering to reach the lens 220 and the image sensor 242 without any distortion. A peripheral edge 228 of the cover glass 226 may be coupled to and/or contained within the housing 222 to secure the cover glass 226 to the housing 222 so that light may pass through a central region 230 of the cover glass 226 to reach the lens 220 and the image sensor 242.

The cover glass 226 may be configured to protect the lens 220 and/or one or more additional components of the sensor assembly 208 disposed in the housing 222 (e.g., the image sensor 242). For example, the cover glass 226 may at least partially define an outermost layer of the sensor assembly 208. The cover glass 226 may be configured to prevent moisture and/or debris (i.e., environmental contaminants) from contacting the lens 220 and thereby prevent obstruction of the field of view of the lens 220. Obstructions of the field of view may impact the overall accuracy of the sensor assembly 208 (e.g., the overall accuracy of the images captured by the image sensor 242).

The cover glass 226 may be removably coupled to the sensor assembly 208. For example, the cover glass 226 may be removably coupled to the housing 222. The cover glass 226 may thus be removed and/or replaced without impacting the lens 220 of the image sensor 242. For example, the cover glass 226 may be at least partially disposed between portions of the housing 222, whereby the portions of the housing 222 may be disconnected from one another (e.g., by removing housing fasteners 232 extending through the portions of the housing 222) to remove the cover glass 226 for replacement or repair without disconnecting the sensor assembly 208 from the machine 100.

As discussed above, the cover glass 226 may be positioned outward from the lens 220 and the image sensor 242 such that the cover glass 226 protects the lens 220 and the image sensor 242 from moisture and/or debris. As a result, the cover glass 226 may become dirty and obstruct the field of view of the lens 220, which may negatively impact the overall accuracy of the sensor assembly 208 (e.g., the overall accuracy of the images captured by the image sensor 242).

To alleviate the above challenges, the sensor assembly 208 may be configured to clean the cover glass 226 to remove the moisture and/or debris from the cover glass 226 and thereby maintain the field of view of the lens 220. For example, the cover glass 226 may include or be coupled to a piezoelectric device 234. The piezoelectric device 234 may receive an electrical voltage, such as through wiring 236 connected to the piezoelectric device 234, to oscillate (e.g., vibrate) at least a portion of the piezoelectric device 234. Oscillation of the piezoelectric device 234 may in turn oscillate (e.g., vibrate) the cover glass 226 to remove the moisture and/or debris from the cover glass 226. For example, the wiring 236 may be coupled to a control module 238 of the sensor system 206, and the control module 238 may be configured to control a frequency of vibration of the piezoelectric device 234. The vibration frequency of the piezoelectric device 234 may be configured to cause removal of the moisture and/or debris from the cover glass 226.

At least a portion of the piezoelectric device 234 may be configured to expand and contract in response to application of an electrical voltage (e.g., in response to an electrical voltage applied to the piezoelectric device 234 via the wiring 236) to vibrate the cover glass 226 at a desired frequency. The vibration frequency of the cover glass 226 may be the same as the vibration frequency of the piezoelectric device 234 or may be different from the vibration frequency of the piezoelectric device 234. For example, material and/or structural differences between the cover glass 226 and the piezoelectric device 234 may result in the cover glass 226 vibrating at a higher or lower frequency than the vibration frequency (e.g., the vibration frequency controlled by the control module 238) of the piezoelectric device 234. In such a case, the control module 238 may be configured to account for the vibration frequency differences between the cover glass 226 and the piezoelectric device 234 and adjust the vibration frequency of the piezoelectric device 234 accordingly. That is, the vibration frequency of the piezoelectric device 234 may be adjusted (e.g., via the control module 238) to obtain a desired vibration frequency of the cover glass 226.

The desired vibration frequency of the cover glass 226 may be any vibration frequency sufficient to cause removal of the moisture and/or the debris. For example, the piezoelectric device 234 may vibrate the cover glass 226 at a frequency of about 20 kHz to about 400 kHz. That is, the piezoelectric device 234 may be configured to selectively vibrate at ultrasonic frequencies to thereby vibrate the cover glass 226 at ultrasonic frequencies. For example, the piezoelectric device 234 may vibrate at different frequencies, such as at different frequencies within the range of about 20 kHz to about 400 kHz, to remove the debris and/or moisture from the cover glass 226. The piezoelectric device 234 may selectively vibrate at the different frequencies based upon detection of a particular contaminant (e.g., moisture or debris) disposed on one or more surfaces of the cover glass 226. For example, the sensor assembly 208 may detect particular contaminants and, in response to the detected contaminant, the control module 238 may vibrate the piezoelectric device 234 at a particular frequency associated with cleaning the detected contaminant. That is, the control module 238 may vibrate the piezoelectric device 234 at one or more predefined frequencies that are associated with cleaning particular contaminants.

While vibration of the piezoelectric device 234 is discussed in detail above, the piezoelectric device 234 may also move in other manners to thereby move the cover glass 226. For example, the piezoelectric device 234 may deflect (e.g., bend) to tilt (e.g., pitch or rotate) the cover glass 226 at a sufficient angle steep enough to cause the moisture and/or the debris to slide off of the cover glass 226. Additionally, the piezoelectric device 234 may deflect (e.g., bend) to translate the cover glass 226 in one or more directions (e.g., towards and/or away from the lens 220 along the optical axis 240.

To further illustrate operation of the sensor assembly 208, FIG. 2B will now be discussed in further detail. As mentioned above, FIG. 2B illustrates cross-section 2B-2B of the sensor assembly 208 shown in FIG. 2A.

As shown in FIG. 2B, the sensor assembly 208 may include the housing 222, which may define the cavity 224 therein. The lens 220 may be disposed in the cavity 224 of the housing 222. For example, the lens 220 may be disposed in the cavity 224 of the housing 222 and may extend along an optical axis 240 of the sensor assembly 208.

The image sensor 242 may also be disposed in the cavity 224. As discussed above, the image sensor 242 may be configured to capture images through the lens 220 and the cover glass 226. For example, the image sensor 242 may be coupled to and/or in electrical communication with a printed circuit board assembly (PCBA) 244 of the sensor assembly 208. The PCBA 244 may be configured to operate (e.g., control) the image sensor 242 or otherwise communicate with the image sensor 242 to send data to and/or receive data from the image sensor 242. The PCBA 244 may be disposed in the cavity 224 of the housing 222 and coupled to the housing 222 by one or more PCBA fasteners 246. The image sensor 242 may be disposed on a surface of the PCBA 244 between the PCBA 244 and the lens 220 such that images captured by the image sensor 242 through the lens 220 may be received by the PCBA 244. The images may then be transmitted from the PCBA 244 or directly from the image sensor 242 to a computing device (e.g., the control module 238) of the sensor system 206 and/or to a computing device in communication with the sensor system 206 (e.g., a computing device of the machine 100) via a connector 248, which may be any type of electrical connector.

To facilitate accurate image capturing, the image sensor 242 may be disposed in the cavity 224 (e.g., inward from the lens 220 within the cavity 224) and aligned with the lens 220 along the optical axis 240 of the sensor assembly 208. For example, the image sensor 242 and/or the lens 220 may be at least partially contained within a lens holder 250, whereby the lens holder 250 may maintain a relative position between the image sensor 242 and the lens 220. Moreover, the cover glass 226 may be positioned outward from (e.g., external to) the lens 220 and the image sensor 242 such that the image sensor 242 may capture images within the field of view of the lens 220 through the cover glass 226. That is, the image sensor 242 may capture images within the field of view of the lens 220 through both the lens 220 and the cover glass 226. The cover glass 226 may also be aligned with the lens 220 and the image sensor 242 along the optical axis 240 or may be offset from the lens 220 and the image sensor 242 with respect to the optical axis 240.

As described above, the cover glass 226 may be directly or indirectly coupled to the housing 222. For example, as shown in FIG. 2B, the cover glass 226 may be movably coupled to the housing 222, such as via a cover glass seal 252. To facilitate movement (e.g., vibration) of the cover glass 226 with respect to the housing 222, the cover glass 226 may be movably coupled to the housing 222 in a suspended state such that the cover glass 226 is free of direct contact with the housing 222. For example, the cover glass 226 may extend across the cavity 224 of the housing 222 such that the peripheral edge 228 of the cover glass 226 extends to or beyond an outer boundary of the cavity 224. As a result, the cover glass 226, in conjunction with the cover glass seal 252, may enclose the cavity 224 of the housing 222. Additionally, due to the transparency of the cover glass 226, the cover glass 226 may still facilitate image capturing by the image sensor 242 through the cover glass 226.

The cover glass 226 may be movably coupled to the housing 222 by the cover glass seal 252 being disposed therebetween. That is, the cover glass 226 may be free of direct contact with the housing 222 due to positioning of the cover glass seal 252. The cover glass seal 252 may also maintain a seal between the cover glass 226 and the housing 222. For example, the cover glass seal 252 may create a seal, such as a waterproof seal and/or airtight seal, which may prevent moisture and/or debris from entering the cavity 224 through a gap between the cover glass 226 and the housing 222. The cover glass seal 252 may maintain the seal between the cover glass 226 and the housing 222 when the cover glass 226 is moved (e.g., vibrated) by the piezoelectric device 234.

By way of example, the cover glass seal 252 may be made of a flexible material, such as rubber (e.g., silicon rubber, neoprene rubber, nitrile rubber, etc.), ethylene propylene diene monomer (EPDM), polyurethane, thermoplastic elastomer, fluoroelastomer, other flexible materials, or a combination thereof. The flexible material may allow for vibration of the cover glass 226 while still maintaining the seal formed between the cover glass 226 and the housing 222. That is, the cover glass seal 252 may flex, compress, bend, or be otherwise compliant enough to allow vibration of the cover glass 226 yet dampen such vibration to maintain the seal between the cover glass 226 and the housing 222. Thus, the cover glass 226 may be able to vibrate and the cover glass seal 252 may isolate such vibration so that the remaining components of the sensor assembly 208 (e.g., the housing 222, the lens 220, the image sensor 242, etc.) are unaffected by the vibration.

A structure of the housing 222 may help facilitate the seal formed by the cover glass seal 252. That is, the housing 222 may be shaped or otherwise configured to receive at least a portion of the cover glass seal 252 to maintain engagement between the cover glass seal 252 and the housing 222. For example, the housing 222 may define an annular slot, channel, or groove that may receive the cover glass seal 252 to form the seal therebetween. The cover glass seal 252 may be annular in shape or otherwise complementary in shape to the annular slot, channel, or groove of the housing 222 to maintain engagement therebetween.

The housing 222 may be any desired size and/or shape to facilitate engagement with the cover glass seal 252. By way of example, as shown in FIG. 2B, the housing 222 may include a main housing 254, a front housing 256 coupled to the main housing 254 (e.g., via an adhesive and/or the housing fasteners 232), and a rear housing 258 coupled to the main housing 254 (e.g., via an adhesive and/or the housing fasteners 232). The cover glass 226 may be movably coupled to the main housing 254. The front housing 256 may be positioned outward from the cover glass 226 and/or outward from the main housing 254. For example, the front housing 256 may extend towards the optical axis 240 beyond the peripheral edge 228 of the cover glass 226 such that the peripheral edge 228 of the cover glass 226 is obstructed from view from a viewpoint external to the sensor assembly 208 (e.g., as shown in FIG. 2A). Additionally, the rear housing 258 may be positioned inward from the main housing 254 and/or inward from the cover glass 226.

The cover glass 226 may be coupled to the main housing 254 by the cover glass seal 252. The cover glass seal 252 may be compressed between the front housing 256 and the main housing 254 to form the waterproof seal therebetween and to couple the cover glass 226 to the main housing 254 in a suspended state. The suspended state may allow movement of the cover glass 226 with respect to the housing 222 (e.g., with respect to the main housing 254) while maintaining the waterproof seal therebetween. Thus, the cover glass 226 may be coupled to the housing 222 without adhering or otherwise bonding the cover glass 226 to the housing 222. It should also be noted that the cover glass seal 252 may be coupled to the cover glass 226 in any desired manner. For example, the cover glass seal 252 may by overmolded, bonded (e.g., adhered), or mechanically fastened to the cover glass 226 to maintain connection therebetween.

To further improve sealing of the sensor assembly 208, the sensor assembly 208 may include one or more additional seals in addition to the cover glass seal 252. For example, a front seal 260 may be disposed between the front housing 256 and the main housing 254 to seal a gap therebetween. Moreover, one or more rear seals, such as the rear seals 262 may be disposed between the rear housing 258 and the main housing 254 and/or between the rear housing 258 and the connector 248 to seal a gap therebetween. The front seal 260 and/or the rear seals 262 may be the same as the cover glass seal 252 (e.g., the same material) or may be different from the cover glass seal 252 (e.g., a different material).

Based on the above configuration of the sensor assembly 208, the cover glass 226 may move (e.g., vibrate) to cause removal of moisture and/or debris (i.e., environmental elements) from one or more surfaces of the cover glass 226. For example, the cover glass 226 may include a front surface 264 that is exposed to the environmental elements and an opposing rear surface 266 that faces the lens 220. The cover glass 226 may move (e.g., vibrate) to cause removal of moisture and/or debris from the front surface 264 and/or the opposing rear surface 266. Due to sealing the cavity 224 of the housing 222 via the cover glass seal 252, the front seal 260, and the rear seals 262, the opposing rear surface 266 of the cover glass 226 may not require cleaning, as the opposing rear surface 266 may be at least partially contained within the cavity 224.

As discussed above, to facilitate cleaning of the front surface 264 and/or the opposing rear surface 266 of the cover glass 226, the sensor assembly 208 may include the piezoelectric device 234. The piezoelectric device 234 may be coupled to the cover glass 226 (e.g., bonded to the cover glass 226 via an adhesive) and configured to move the cover glass 226 to clean one or more surfaces of the cover glass 226, such as the front surface 264 and/or the opposing rear surface 266. For example, as shown in FIGS. 2B and 2C, the piezoelectric device 234 may be coupled to the opposing rear surface 266 of the cover glass 226 and laterally positioned between the housing 222 and the optical axis 240 with respect to the optical axis 240. That is, the piezoelectric device 234 may be positioned between the housing 222 (e.g., the main housing 254) and the optical axis 240 with respect to a lateral direction of the sensor assembly 208 that extends transverse to the optical axis 240.

The piezoelectric device 234 may be positioned in a manner that maintains the field of view of the lens 220. That is, the lens 220 may be unobstructed by the piezoelectric device 234. For example, the piezoelectric device 234 may be annular, semi-annular, or otherwise positioned outside of the field of view of the lens 220 adjacent to the peripheral edge 228 of the cover glass 226 and/or adjacent to the cover glass seal 252. The piezoelectric device 234 may be free of contact with the cover glass seal 252 or may contact the cover glass seal 252.

Due to coupling the piezoelectric device 234 to the opposing rear surface 266 of the cover glass 226, the cover glass 226 may vibrate in response to vibrations of the piezoelectric device 234. As a result, the cover glass 226 may move (e.g., vibrate) with respect to the housing 222 due to flexibility of the cover glass seal 252. The cover glass seal 252 may be tuned and/or may position the cover glass 226 to avoid contact between the cover glass 226 and the lens 220. That is, the cover glass seal 252 and/or the distance between the cover glass 226 and the lens 220 may be optimized to prevent contact between the cover glass 226 and the lens 220 when the cover glass 226 is vibrated and to maintain the field of view of the lens 220. Additionally, though not shown in FIGS. 2B and 2C for simplicity, the piezoelectric device 234 may be electrically connected to the control module 238 via the wiring 236 to receive an electrical voltage (e.g., an AC voltage) to vibrate the piezoelectric device 234 and thereby vibrate the cover glass 226 for cleaning the cover glass 226.

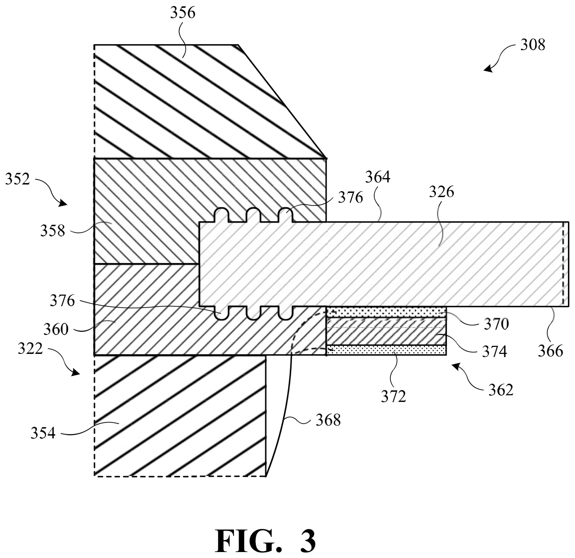

FIG. 3 illustrates a close-up view of another example of a sensor assembly 308. The sensor assembly 308 may be similar to the sensor assembly 208 shown in FIGS. 2A-2C. That is, unless otherwise stated, the components of the sensor assembly 308 may be the same as the component of the sensor assembly 208. The sensor assembly 308 may be used in lieu of, or in conjunction with, the sensor assembly 208. For example, the sensor system 206 may include both the sensor assembly 208 and the sensor assembly 308 (e.g., the sensor system 206 may include a first sensor assembly that is the sensor assembly 208 and a second sensor assembly that is similar to the sensor assembly 308) or, alternatively, the sensor system 206 may include the sensor assembly 308 instead of the sensor assembly 208. Thus, the description of the sensor assembly 208 above with respect to FIGS. 2A-2C may be applicable to the sensor assembly 308 shown in FIG. 3 unless otherwise stated.

An overall configuration of the sensor assembly 308 may be similar to the configuration of the sensor assembly 208 shown in FIG. 2B. For example, the sensor assembly 308 may include a housing 322 that is similar to the housing 222 and at least partially defines a cavity therein, whereby an image sensor and a lens may be disposed in the cavity of the housing 322. The sensor assembly 308 may also include a cover glass 326, which may be similar to the cover glass 226 and may be coupled to the housing 322 via a cover glass seal 352. For example, the housing 322 may include a main housing 354 and a front housing 356 coupled to the main housing 354. The cover glass seal 352 may be disposed between (e.g., compressed between) the front housing 356 and the main housing 354 to couple the cover glass 326 to the housing 322.

The cover glass seal 352 may include a front portion 358 and a rear portion 360 coupled to the front portion 358. At least a portion of the front portion 358 may be positioned outward (e.g., in front of) the cover glass 326 while at least a portion of the rear portion 360 may be positioned inward (e.g., behind) the cover glass 326. The front portion 358 and the rear portion 360 may formed with one another or otherwise bonded to each other such that the cover glass 326 may be positioned therebetween to couple the cover glass 326 to the cover glass seal 352.

Similar to the cover glass seal 252 shown in FIGS. 2B and 2C and discussed above, the cover glass seal 352 may be made of a flexible and/or compressible material that facilitates movement (e.g., vibration) of the cover glass 326 relative to the housing 322. For example, the front portion 358 and/or the rear portion 360 may be made of the same or different materials, whereby the front portion 358 and/or the rear portion 360 may be flexible and/or compressible. By way of example, the front portion 358 and the rear portion 360 may be made of dissimilar materials such that a hardness of the front portion 358 is different than a hardness of the rear portion 360. Therefore, the front portion 358 and the rear portion 360 may flex and/or compress in different manners. Thus, the cover glass seal 352 may be further tuned to facilitate vibration of the cover glass 326 with respect to the housing 322. For example, the rear portion 360 may be harder and less compliant than the front portion 358 so that vibration of the cover glass 326 may move the cover glass 326 outward away from the lens while movement of the cover glass 326 toward the lens may be prevented by the harder material of the rear portion 360.

The sensor assembly 308 may also include a piezoelectric device 362, which may be similar to the piezoelectric device 234 shown in FIGS. 2A-2C. For example, the piezoelectric device 362 may be configured to vibrate the cover glass 326 to clean one or more surfaces of the cover glass 326, such as a front surface 364 and/or an opposing rear surface 366 of the cover glass 326. The piezoelectric device 362 may be coupled to a surface of the cover glass 326 (e.g., the opposing rear surface 366 of the cover glass 326) so that, when the piezoelectric device 362 receives an electrical voltage via wiring 368, vibration of the piezoelectric device 362 vibrates the cover glass 326.

To facilitate vibration of the piezoelectric device 362 or at least a portion thereof, the piezoelectric device 362 may include a first electrode 370, a second electrode 372, and a piezoelectric material 374 disposed between and coupled to the first electrode 370 and the second electrode 372. The piezoelectric material 374 may be any type of material that may expand and contract based upon an electrical voltage to thereby vibrate the cover glass 326. For example, the piezoelectric material 374 may be a ceramic (e.g., lead zirconate titanate, barium titanate, sodium potassium niobate, etc.), a crystal (e.g., a natural or synthetic crystal), a polymer (e.g., polyvinylidene fluoride (PVDF), polyvinylidene fluoride-trifluoroethylene (PVDF-TrFE), etc.), a composite (e.g., a ceramic-polymer composite, a fiber-based composite, etc.), another material, or a combination thereof. The first electrode 370 and the second electrode 372 may receive an electrical voltage (e.g., from the wiring 368) to expand and contract the piezoelectric material 374 located therebetween to thereby vibrate the cover glass 326. That is, the first electrode 370 and the second electrode 372 may be a disk, plate, or film of conductive material that may effectively and efficiently transmit the electrical voltage to the piezoelectric material 374 to thereby expand and contract the piezoelectric material 374 and cause vibration of the piezoelectric device 362.

Additionally, the cover glass 326 may include one or more ribs, such as the ribs 376, that project from one or more surfaces of the cover glass 326, such as the front surface 364 and/or the opposing rear surface 366. The ribs 376 may be coupled to or integrally formed with the cover glass 326. The ribs 376 may project from the cover glass 326 towards or into the cover glass seal 352. By way of example, a first portion of the ribs 376 may project from the front surface 364 of the cover glass 326 towards or into the front portion 358 of the cover glass seal 352 and a second portion of the ribs 376 may project from the opposing rear surface 366 of the cover glass 326 towards or into the rear portion 360 of the cover glass seal 352. The ribs 376 may be flexible and/or compressible such that the ribs 376 form or otherwise improve sealing a gap between the cover glass seal 352 and the cover glass 326. That is, the ribs 376 may contact the front portion 358 and/or the rear portion 360 of the cover glass seal 352 to seal a gap between the cover glass seal 352 and the cover glass 326.

Furthermore, a geometry of the ribs 376 may also facilitate less energy being required to vibrate the cover glass 326 using the piezoelectric device 362. For example, the ribs 376 may decrease an overall contact surface between the cover glass 326 and the cover glass seal 352 compared to if the cover glass 326 is free of the ribs 376. As a result, the piezoelectric device 362 may more easily vibrate the cover glass 326 with respect to the cover glass seal 352. That is, the piezoelectric device 362 may require less energy to vibrate the cover glass 326, and thus the ribs 376 may improve the overall efficiency of the piezoelectric device 362.Additionally, in certain implementations, the cover glass 326 may also be free of any of the ribs 376. Therefore, similar to the sensor assembly 208, the sensor assembly 308 may provide an effective way to clean the cover glass 326 and maintain protection of the lens and/or the image sensor of the sensor assembly 308 without compromising the accuracy of images captured by the image sensor.

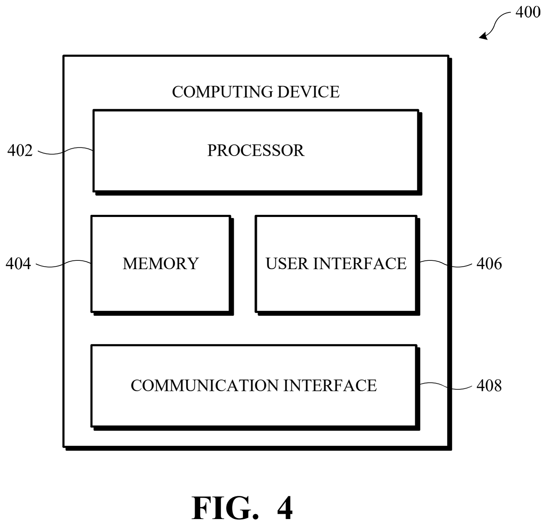

FIG. 4 is an example of a computing device 400. The computing device 400 is shown as including a processor 402, a memory 404, a user interface 406, and a communication interface 408. The computing device 400 may be implemented by a system, such as the sensor system 106 of FIGS. 1A and 1B or the sensor system 206 of FIGS. 2A-2C. The computing device 400 may facilitate communication between a machine, such as the machine 100 of FIGS. 1A and 1B, and the sensor system. The computing device 400 may also facilitate communication between a user and the sensor system. The computing device 400 can execute instructions such as those of a cleaning operation to clean cover glass of a sensor assembly.

By way of example, the computing device 400 may be or may include the control module 118 of the machine 100 shown in FIGS. 1A and 1B. The computing device 400 may facilitate communication between the machine 100 and the sensor system 106. For example, the computing device 400 may facilitate communication between the machine 100 and the first sensor assembly 108 and/or between the machine 100 and the second sensor assembly 112. Similarly, the computing device 400 may facilitate communication between the machine 100 and the sensor system 206 shown in FIGS. 2A-2C. For example, the computing device 400 may facilitate communication with the control module 238 of the sensor system 206 shown in FIG. 2A, whereby the control module 238 may be used to control one or more operations of the sensor assembly 208 (e.g., image capturing using the sensor assembly 208 and/or cleaning of the cover glass 226 of the sensor assembly 208). Thus, a user may communicate with the control module 238 via the computing device 400 to operate the sensor assembly 208.

In some implementations, the computing device 400 may be or may include the control module 238 of FIG. 2A to facilitate communication with the sensor assembly 208. For example, the user may, via the user interface 406, control one or more operations of the sensor assembly 208 (e.g., image capturing using the sensor assembly 208 and/or cleaning of the cover glass 226 of the sensor assembly 208). Thus, a user may communicate with the sensor assembly 208 via the computing device 400 to operate the sensor assembly 208.

The processor 402 may be a microprocessor and may include a single processor or multiple processors. A processor may have a single processing core or multiple processing cores. The processor 402 may be or include other types of devices, or multiple devices, not existing or hereafter developed, configured for manipulating or processing information. The computing device 400 may include multiple processors interconnected in one or more manners, including but not limited to, hardwired or networked (e.g., wirelessly networked). By way of example, the operations of the processor 402 may be distributed across multiple devices or units that may be coupled directly or via a local area or other suitable network. The processor 402 may also include a cache or cache memory for local storage of operating data or instructions associated with the evaluation.

The memory 404 may include one or more memory components, which may each be volatile memory or non-volatile memory. For example, the volatile memory of the memory 404 may be random access memory (RAM) (e.g., a DRAM module, such as DDR SDRAM) or another form of volatile memory. In another example, the non-volatile memory of the memory 404 may be a disk drive, a solid-state drive, flash memory, phase-change memory, or another form of non-volatile memory configured for persistent electronic information storage. The memory 404 may also include other types of devices, now existing or hereafter developed, configured for storing data or instructions for processing by the processor 402.

The memory 404 can include data for immediate access by the computing device 400. For example, the memory 404 may include executable instructions, application data, an operating system, or a combination thereof accessible by the processor 402. The executable instructions, the application data, the operating system, or a combination thereof may be loaded or copied, in whole or in part, from non-volatile memory to volatile memory to be executed by the computing device 400. For example, the executable instructions and application data may include instructions and data for, as described herein, cleaning operations of the cover glass of a sensor assembly; determining when to initiate a cleaning operation of the cover glass based upon the quality (e.g., clear vs. blurry due to moisture and/or debris) of an image captured by the sensor assembly; determining; and overall sensor assembly control. As such, the memory 404 may include executable instructions that, when executed by the processor 402, facilitate the performance of or perform the techniques described herein.

The memory 404 may include executable instructions or application data associated with a communication interface 408. The communication interface 408 may be or may include a transmitter and/or a receiver. The communication interface 408 may facilitate communication between, for example, a machine and a sensor system. For example, the communication interface 408 may enable data exchange over a communication path allowing for real-time synchronization and data updates between the machine and the sensor system.

The user interface 406 may include one or more input interfaces and/or output interfaces. An input interface may be, for example, a positional input device, such as a mouse, touchpad, touchscreen, or the like; a keyboard; or another suitable human or machine interface device. An output interface may be, for example, a display, such as a liquid crystal display, a cathode-ray tube, a light emitting diode display, or other suitable display. As such, an operator may interact with sensor system operation software, select or configure cleaning of a sensor assembly, view real-time data related to the sensor system (e.g., data associated with a cleanliness of the cover glass of a sensor assembly, data associated with a quality of the images captured by the sensor assembly, etc.), and monitor the status of sensor system through the user interface 406. Additionally, the user interface 406 may provide visual indicators and alerts to assist the operator (i.e., the user) in maintaining optimal system operation and synchronization.

The computing device 400 may include additional components. For example, the computing device 400 may include power management units, various sensors for monitoring environmental conditions and machine status, and interfaces for connecting to external storage devices or other peripherals. These components may ensure that the computing device 400 operates reliably in various agricultural environments and can handle the processing and communication demands of the sensor system.

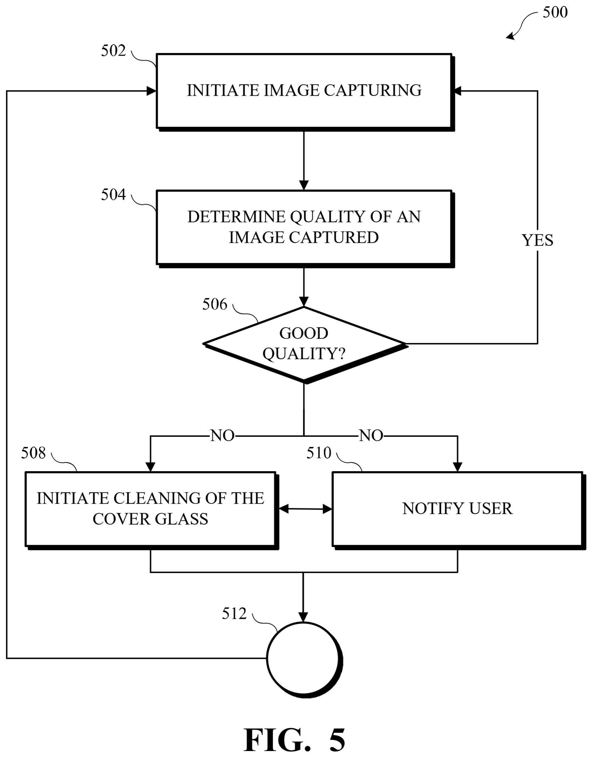

To further describe some implementations in greater detail, reference is next made to examples of techniques which may be performed by or using a sensor system to operate a sensor assembly and/or clean the cover glass of the sensor assembly. FIG. 5 is a flowchart of an example of a technique 500 for operating a sensor assembly. The technique 500 may include cleaning the cover glass of the sensor assembly. The technique 500 can be executed using computing devices, such as the systems, hardware, and software described with respect to FIGS. 1A-4. The technique 500 can be performed, for example, by executing a machine-readable program or other computer-executable instructions, such as routines, instructions, programs, or other code. The steps, or operations, of the technique 500, or another technique, method, process, or algorithm described in connection with the implementations disclosed herein can be implemented directly in hardware, firmware, software executed by hardware, circuitry, or a combination thereof. The technique 500 can be executed by a sensor system, such as the sensor system 106 of FIGS. 1A and 1B or the sensor system 206 of FIGS. 2A-2C.

For simplicity of explanation, the technique 500 is depicted and described herein as a respective series of steps or operations. However, the steps or operations of the technique 500 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 502, an image is captured. In an example, a sensor assembly (e.g., a sensor assembly of a sensor system, such as those described with respect to FIGS. 1A-4) may include an image sensor (e.g., a camera), which may capture images of an environment. For example, the sensor assembly may be coupled to or otherwise disposed on a body of a machine to capture images of an area surrounding the machine. The captured images may be utilized by the sensor system or an additional system (e.g., a system of the machine) to analyze the surrounding area (e.g., to analyze one or more objects present in the surrounding area). For example, the captured images may be evaluated to assess one or more parameters associated with crops present in the surrounding area, such as, for example, a nutrient level of the crops; a moisture level of the crops; and one or more dimensions of the crops.

After the image is captured, , the image is evaluated to determine the quality of the image at 504. Determining the quality of the image captured may include an evaluation of the image to assess whether the image is blurry, distorted, or otherwise obstructed, which may be a result of moisture and/or debris present on the cover lens of the sensor assembly. Any number of techniques can be used to determine whether the image is blurry or distorted.

To assess whether the image is blurry or distorted, edge detection techniques can be utilized to analyze the sharpness of the edges in the image, as blurry images typically exhibit smoother transitions between different regions of brightness. Additionally, frequency domain analysis may be employed to evaluate the presence of high-frequency components, which represent fine details; a reduced presence of these components could indicate blurriness. Distortions in the image may be identified by comparing geometric patterns or expected shapes within the image to a reference, as distortions often manifest as deviations in straight lines or regular forms.

In cases where moisture or debris is present on the cover lens, the image may exhibit anomalies such as dark spots, smudges, or regions with reduced contrast. These artifacts can be detected by analyzing the uniformity of brightness and contrast across the image, with sudden variations potentially indicating the presence of an obstruction. Machine learning techniques, such as convolutional neural networks (CNNs), may also be implemented to classify and identify image quality issues, enabling the system to automatically detect whether the image is blurry, distorted, or obstructed. The combination of these methods provides a comprehensive approach to ensuring that the image captured is of sufficient quality for further processing.

If the quality of the image is determined to be good, at 506, the sensor assembly may continue operation (e.g., continue image capturing) without interruption. That is, the technique 500 proceeds back to 502 to capture another image. The image capture, at 502, may be repeated based upon a desired time interval or manual interaction of the user to continuously assess the quality of images being captured by the sensor assembly. However, if the quality of the image determined at 506 to be poor (e.g., the image is not of good quality)- that is, the quality of the image is not sufficient to accurately analyze the surrounding area - cleaning of the cover glass of the sensor assembly may be initiated at 508 and/or a user (e.g., the machine operator) may notified at 510.

Cleaning of the cover glass at 508 may be completed in accordance with the techniques described above with respect to FIGS. 2A-3. By way of example, a control module of the sensor system may transmit an electrical voltage to a piezoelectric device coupled to the cover glass to vibrate the piezoelectric device, which in turn may vibrate the cover glass to remove any moisture and/or debris from the cover glass. The piezoelectric device may vibrate at one or more frequencies to vibrate the cover glass at one or more frequencies. For example, as described further below, the piezoelectric device may initially vibrate at a "low" frequency and, if the moisture and/or debris is not successfully removed from the cover glass, the piezoelectric device may subsequently vibrate at a "high" frequency to remove the moisture and/or debris. In an example, the vibration frequency may be based on the determined quality of the image. For example, the vibration frequency may be proportional to the amount of distortion or blurriness.

User notification at 510 may be or may include a visual, audio, or other tactile alert to notify the user of a current status of the sensor assembly. That is, the user may be notified that the sensor assembly requires cleaning (e.g., cleaning of the cover glass); that cleaning of the cover glass has commenced and/or ended; that a quality of the image captured is insufficient to continue operation (e.g., to accurately evaluate the surrounding area); of an overall operating status of the sensor assembly; or a combination thereof. The user may be notified in any desired manner. For example, the user may be notified via a control module of a machine in communication with the sensor (e.g., a display thereof), a control module of the sensor system (e.g., a display thereof), another computing device in communication with the sensor system (e.g., a mobile phone or table of the user), or a combination thereof.

During and/or after cleaning of the cover glass, the technique 500 proceeds to 512, from which it proceeds back to 502. For example, once the cover glass of the sensor assembly is cleaned, the sensor assembly may recommence operation to continue capturing images of the surrounding area. In some implementations, image capturing may be continuous such that cleaning of the cover glass may be completed simultaneously with image capturing. That is, images may be captured by the sensor assembly even during cleaning of the cover glass.

Based on the technique 500, the cover glass of the sensor assembly may be monitored (e.g., by evaluating the images captured by the sensor assembly) to determine when the cover glass may be dirty and may impact operation of the sensor assembly. Responsive to detecting that the cover glass is dirty, the technique 500 may complete cleaning of the cover glass to ensure that operation of the sensor assembly can continue as intended.

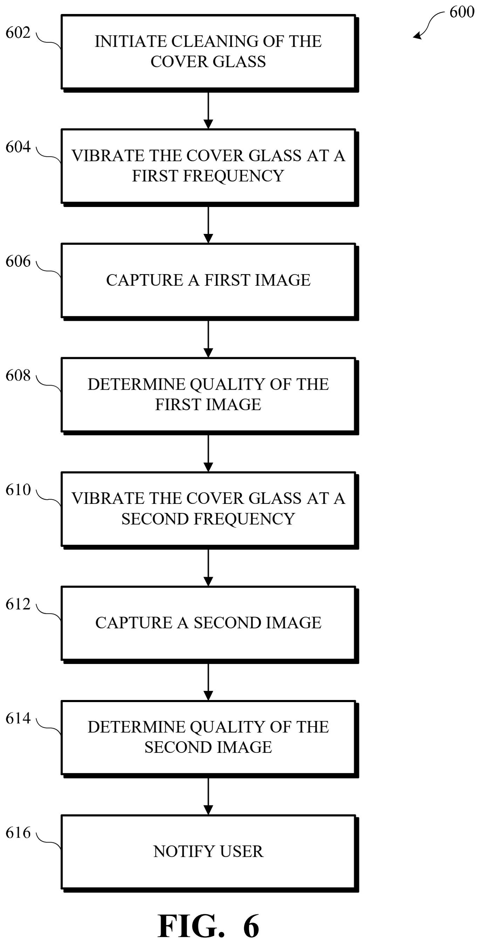

FIG. 6 is a flowchart of a first example of a technique 600 for cleaning the cover glass of a sensor assembly. The technique 600 can be executed using computing devices, such as the systems, hardware, and software described with respect to FIGS. 1A-4. The technique 600 can be performed, for example, by executing a machine-readable program or other computer-executable instructions, such as routines, instructions, programs, or other code. The steps, or operations, of the technique 600 can be implemented directly in hardware, firmware, software executed by hardware, circuitry, or a combination thereof. The technique 600 can be executed by a sensor system, such as the sensor system 106 of FIGS. 1A and 1B or the sensor system 206 of FIGS. 2A-2C.

For simplicity of explanation, the technique 600 is depicted and described herein as a respective series of steps or operations. However, the steps or operations of the technique 600 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 602, cleaning of the cover glass of the sensor assembly may be initiated. Initiation of the cleaning at 602 may be done manually (e.g., by a user through a user interface of the sensor system and/or through a user interface of a control module of a machine in communication with the sensor system). In another example, the cleaning may be initiated in response to determining that a captured image has bad quality.

Once cleaning of the cover glass is initiated at 602, the cover glass may be vibrated at a first frequency at 604. Vibration of the cover glass may be completed in accordance with the techniques described above with respect to FIGS. 2A-3. For example, a piezoelectric device coupled to the cover glass may be vibrated to in turn vibrate the cover glass. As described above, the piezoelectric device and thus the cover glass may be vibrated at one or more frequencies. Thus, the first frequency may be considered an initial frequency of the cleaning operation, which may be a less severe or aggressive vibration of the cover glass. For example, cleaning of the cover glass may operate based on predefined settings (e.g., low, medium, high), whereby each setting may be associated with a particular frequency. In such a scenario, the first frequency may be associated with a low or medium setting to vibrate the cover glass at a lower frequency when compared to a frequency associated with a high setting.

After the cover glass is vibrated at the first frequency at 604, a first image may be captured at 606. That is, the cover glass may be vibrated at the first frequency to complete a first cleaning sequence and the sensor assembly may capture the first image after completion of the first cleaning sequence.

The first image may then be evaluated at 608 to determine the quality of the first image. The quality of the first image may determined as described above with respect to the technique 500 of FIG. 5. For example, the first image may be evaluated to determine whether the first image is blurry or otherwise distorted due to moisture and/or debris present on the cover glass of the sensor assembly. If the quality of the first image determined at 608 is good - that is, the quality of the first image is sufficient to continue operation of the sensor system as intended (e.g., to accurately analyze the area surrounding the sensor system) - cleaning of the cover glass may be completed, and the sensor system may continue normal operation.

However, if the quality of the first image is determined to be poor - that is, the first image is blurry or otherwise distorted - the cover glass may be vibrated at a second frequency at 610. The second frequency may be greater than the first frequency such that the cover glass may be vibrated more aggressively. For example, the first frequency may be associated with a low or medium operating level for cleaning the cover glass whereas the second frequency may be associated with a medium or high operating level, respectively, for cleaning the cover glass. That is, the second frequency may be greater than the first frequency such that a second cleaning sequence may remove the moisture and/or debris still present on the cover glass after the first cleaning sequence.

After the cover glass is vibrated at the second frequency at 610, a second image may be captured at 612. That is, the cover glass may be vibrated at the second frequency to complete the second cleaning sequence and the sensor assembly may capture the second image after completion of the second cleaning sequence.

That second image may then be evaluated at 614 to determine the quality of the second image. The quality of the second image may be determined similarly to determining the quality of the first image. For example, the second image may be evaluated to determine whether the second image is blurry or otherwise distorted due to moisture and/or debris still present on the cover glass of the sensor assembly.

If the quality of the second image is determined to be good - that is, the quality of the first image is sufficient to continue operation of the sensor system as intended (e.g., to accurately analyze the area surrounding the sensor system) - cleaning of the cover glass may be completed, and the sensor system may continue normal operation. However, if the quality of the second image determined at 614 is poor - that is, the second image is still blurry or otherwise distorted - the user may be notified at 616. User notification may be prformed in accordance with the techniques described above with respect to operation 508 of the technique 500. For example, the user may be notified via a control module of a machine in communication with the sensor (e.g., a display thereof), a control module of the sensor system (e.g., a display thereof), another computing device in communication with the sensor system (e.g., a mobile phone or table of the user), or a combination thereof. Based on such user notification, the user may take manual action to clean the cover glass and ensure proper operation of the sensor assembly.

While the technique 600 describes that the user is notified after two vibration frequencies are attempted, the disclosure is not so limited. For example, the technique 600 may be configured to vibrate the cover glass according to more than two frequencies after which, if the cover glass is not considered to be clean (e.g., images continue to be determined to be of low quality), then the user is notified. Additionally, while not specifically shown in FIG. 6, the technique 600 resets (e.g., reverts) to using the first (e.g., the lowest) frequency after successful cleansing of the cover glass.

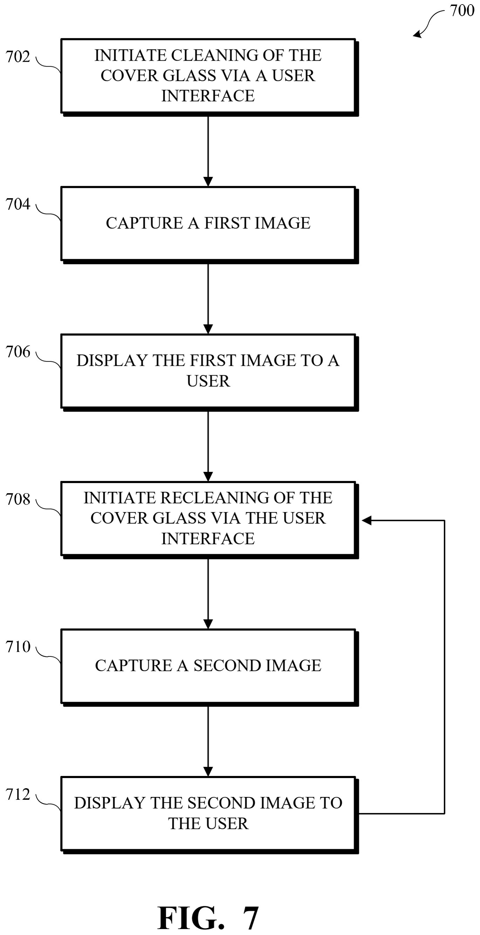

FIG. 7 is a flowchart of a second example of a technique 700 for cleaning the cover of a sensor assembly. The technique 700 can be executed using computing devices, such as the systems, hardware, and software described with respect to FIGS. 1A-4). The technique 700 can be performed, for example, by executing a machine-readable program or other computer-executable instructions, such as routines, instructions, programs, or other code. The steps, or operations, of the technique 600 can be implemented directly in hardware, firmware, software executed by hardware, circuitry, or a combination thereof. The technique 700 can be executed by a sensor system, such as the sensor system 106 of FIGS. 1A and 1B or the sensor system 206 of FIGS. 2A-2C.

For simplicity of explanation, the technique 700 is depicted and described herein as a respective series of steps or operations. However, the steps or operations of the technique 700 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 702, cleaning of the cover glass of the sensor assembly may be initiated via a user interface. That is, the user (e.g., the operator) may manually initiate cleaning of the cover glass through the user interface. The user interface may be a user interface of the sensor system (e.g., a user interface of the control module of the sensor system) and/or a user interface of a control module of a machine in communication with the sensor system. The user interface may be a user interface of a computing device that is separate from, and in communication with, the machine and/or sensor system (e.g., a mobile phone or table of the user).

Once cleaning of the cover glass is initiated at 702, the cover glass may be cleaned in accordance with the technique described above with respect to FIGS. 2A-3. For example, a piezoelectric device coupled to the cover glass may be vibrated to in turn vibrate the cover glass. Cleaning of the cover glass when initiated at 702 may be completed at an initial (i.e., first) frequency, which may be similar to the first frequency described above with respect to operation 604 of the technique 600. For example, the first frequency may be associated with a low or medium operating setting to vibrate the cover glass at a lower frequency when compared to a frequency associated with a high setting. Such cleaning of the cover glass may be considered a first cleaning sequence.

Once the first cleaning sequence is complete, a first image may be captured at 704. That is, the cover glass may be initially vibrated based upon manual input at 702 to complete the first cleaning sequence and the sensor assembly may capture a first image after completion of the first sequence.

The first image may then be displayed to the user at 706. The first image may be displayed to the user using the user interface as described above. For example, the user interface may be a display (e.g., a screen) of the sensor system (e.g., a display of the control module of the sensor system) and/or a display (e.g., a screen) of a control module of a machine in communication with the sensor system. The user interface may be a display (e.g., a screen) of a computing device that is separate from, and in communication with, the machine and/or sensor system (e.g., a mobile phone or table of the user).

The user may then visually evaluate the first image displayed at 706 to determine the quality of the first image. For example, the first image may be visually evaluated by the user to determine whether the first image is blurry or otherwise distorted due to moisture and/or debris present on the cover glass of the sensor assembly. If the user determines that the first image is not blurry or otherwise distorted, cleaning of the cover lens may be completed, and the sensor system may continue normal operation. For example, the user may confirm (not shown), via the user interface, that the first image looks acceptable, which may terminate the cleaning operation and continue operation of the sensor system. However, if the user determines that the first image is blurry or otherwise distorted, the user may initiate recleaning of the cover glass via the user interface at 708. That is, the user may manually initiate recleaning the cover glass through the user interface. For example, the user may confirm, via the user interface, that the image is blurry or otherwise distorted, which may initiate recleaning the cover glass at 708.

Cleaning of the cover glass when reinitiated at 708 may be completed in a similar manner to the first cleaning sequence described above that is initiated at 702. For example, when the user reinitiates cleaning of the cover glass, the cover glass may be vibrated at the same frequency that was used for the first cleaning sequence or may be vibrated at a higher (or lower) frequency than the frequency used for the first cleaning sequence. That is, the frequency used to reclean the cover glass at 708 (i.e., a second frequency) may be the same as, or different from, the first frequency used to complete the first cleaning sequence. Such cleaning of the cover glass may be considered a second cleaning sequence. In an example, the user may control the duration of vibration of the cover glass. To illustrate, the cover glass may continue to be vibrated as long as a user interface control (e.g., a button) is activated (e.g., pressed).

Once the second cleaning sequence is complete, a second image may be captured by the sensor assembly at 710. The second image may then be displayed to the user at 712. The second image may be displayed to the user using the user interface as described above.

The user may then visually evaluate the second image displayed at 712 to determine the quality of the second image. For example, the second image may be visually evaluated by the user to determine whether the second image is blurry or otherwise distorted due to moisture and/or debris still present on the cover glass of the sensor assembly. If the user determines that the second image is not blurry or otherwise distorted, cleaning of the cover lens may be completed, and the sensor system may continue normal operation. For example, the user may confirm, via the user interface, that the image looks acceptable, which may terminate the cleaning operation and continue operation of the sensor system.

However, if the user determines that the second image is blurry or otherwise distorted, the user may again initiate recleaning of the cover glass via the user interface at 708. For example, the user may confirm, via the user interface, that the image is still blurry or otherwise distorted, which may initiate recleaning the cover glass at 708. Thus, the technique 700 may repeat operations 708-712 to repeat cleaning the cover glass and displaying subsequent images (e.g., a third image, a fourth image, etc.) until the user confirms (e.g., via the user interface) that the image being displayed is acceptable to normal continue operation of the sensor system. Alternatively, or additionally, the user may manually clean the cover lens and confirm (e.g., via the user interface) that the sensor system may commence normal operation.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

## Claims

1. A sensor assembly (208), comprising:
a housing (222) that defines a cavity (224) therein;
a lens (220) disposed in the cavity (224);
an image sensor (242) disposed in the cavity (224) and aligned with the lens (220) along an optical axis (240) of the sensor assembly (208);
a cover glass (226) movably coupled to the housing (222) and positioned outward from the lens (220) and the image sensor (242) such that the image sensor (242) is configured to capture images within a field of view of the lens (220) through the cover glass (226); and
a piezoelectric device (234) coupled to the cover glass (226) and configured to oscillate the cover glass (226) to clean one or more surfaces of the cover glass (226).

2. The sensor assembly (208) of claim 1, wherein the cover glass (226) is movably coupled to the housing (222) in a suspended state such that the cover glass (226) is free of direct contact with the housing (222).

3. The sensor assembly (208) of claim 2, wherein the cover glass (226) is movably coupled to the housing (222, 322) by a cover glass (226) seal disposed therebetween.

4. The sensor assembly (208) of claim 1, wherein the cover glass (226) includes a front surface (264) that is configured to be exposed to environmental elements and an opposing rear surface (266) that faces the lens (220).

5. The sensor assembly (208) of claim 4, wherein the piezoelectric device (234) is coupled to the opposing rear surface (266) of the cover glass (226) and laterally positioned between the housing (222) and the optical axis (240) with respect to the optical axis (240).

6. The sensor assembly (208) of claim 1, wherein the piezoelectric device (234) is configured to vibrate the cover glass (226).

7. The sensor assembly (208) of claim 6, wherein at least a portion of the piezoelectric device (234) is configured to expand and contract in response to application of an electrical voltage to the piezoelectric device (234) to vibrate the cover glass (226) at a frequency of about 20 kHz to about 400 kHz.

8. The sensor assembly (208) of claim 1, wherein the housing (222) includes:
a main housing (254), wherein the cover glass (226) is movably coupled to the main housing (254);
a front housing (256) coupled to the main housing (254) and positioned outward from the cover glass (226); and
a rear housing (258) coupled to the main housing (254,) and positioned inward from the main housing (254) and the front housing (256).

9. The sensor assembly (208) of claim 8, wherein the front housing (256) extends towards the optical axis (240) beyond a peripheral edge (228) of the cover glass (226) such that the peripheral edge (228) of the cover glass (226) is obstructed from view from a viewpoint external to the sensor assembly (208).

10. The sensor assembly (208) of claim 8, wherein a front seal (260) is disposed between the front housing (256) and the main housing (254), and a rear seal is disposed between the rear housing (258) and the main housing (254).

11. The sensor assembly (208) of claim 1, wherein the piezoelectric device (234) is configured to be electrically connected to a control module (238), and wherein the control module (238) is configured to operate the piezoelectric device (234) to oscillate the cover glass (226).

12. A sensor assembly (208) for an agriculture machine, comprising:
a housing (222);
a lens (220) disposed in the housing (222) along an optical axis (240) of the sensor assembly (208);
an image sensor (242) disposed in the housing (222) and positioned inward from the lens (220) along the optical axis (240);
a cover glass (226) movably coupled to the housing (222) by a cover glass (226) seal, wherein the image sensor (242) is configured to capture images within a field of view of the lens (220) through the cover glass (226); and
a piezoelectric device (234) coupled to a surface of the cover glass (226) and configured to vibrate the cover glass (226,) to clean the cover glass (226),
wherein the cover glass (226) seal is configured to maintain a seal between the cover glass (226) and the housing (222) when the cover glass (226) is vibrated by the piezoelectric device (234).

13. The sensor assembly (208) of claim 12, wherein the cover glass (226) seal is made of a flexible material that allows for vibration of the cover glass (226) while still maintaining the seal between the cover glass (226) and the housing (222).

14. The sensor assembly (208) of claim 12, wherein the piezoelectric device (234) is configured to vibrate at different frequencies to remove at least one of debris, moisture, frost, or ice from the cover glass (226).

15. The sensor assembly (208) of claim 14, wherein the piezoelectric device (234) is configured to selectively vibrate at ultrasonic frequencies.
